# FASCICULE DE BREVET EUROPEEN

(11) **EP 3 421 834 B1**
(45) Date de publication et mention de la délivrance du brevet: **10.01.2024**
(21) Numéro de dépôt: 18178357.2
(22) Date de dépôt: 18.06.2018
(51) Int. Cl.: F16D 66/02, B60T 17/22, G01B 5/00, G01B 11/02, G06T 7/00

(54) **PROCEDE DE MESURE D'USURE DES DISQUES DE FREINS D'UN AERONEF**
VERFAHREN ZUR VERSCHLEISSMESSUNG DER BREMSSCHEIBEN EINES LUFTFAHRZEUGS
METHOD FOR MEASURING WEAR OF THE BRAKE DISCS OF AN AIRCRAFT

(30) Priorité: 26.06.2017 FR 1755828
(43) Date de publication de la demande: 02.01.2019
(73) Titulaire: Safran Landing Systems, 78140 Vélizy-Villacoublay (FR)
(72) Inventeur: ARRIBE, Baptiste, 78140 Vélizy-Villacoublay (FR)
(74) Mandataire: Lavialle, Bruno François Stéphane

(56) Documents cités:
- EP-A1- 1 707 918
- EP-A1- 3 051 250
- CN-A- 104 455 121
- US-A1- 2009 205 910
- US-A1- 2017 146 084

## Description

L'invention concerne un procédé de mesure d'usure des disques de frein d'un aéronef.

### ARRIERE-PLAN DE L'INVENTION

Les freins des aéronefs modernes comprennent une pile de disques (également appelée puit de chaleur) qui sont pressés les uns contre les autres au moyen de pistons ou de poussoirs pour générer un moment de freinage propre à ralentir la roue à laquelle le frein est associé. Les disques sont susceptibles de s'user à chaque freinage et il importe de connaître leur état d'usure pour prévoir leur remplacement par une pile de disques d'épaisseur adéquate. A cet égard, les freins sont généralement équipés d'au moins un témoin d'usure qui est monté coulissant sur une partie fixe (par exemple la couronne hydraulique du frein) et qui est astreint à venir au contact de la face des disques en regard des pistons du frein, de sorte qu'il se déplace dans son logement au fur et à mesure de l'usure des disques. Sa position est donc indicative de l'état d'usure de la pile de disques.

Pour donner un ordre de grandeur, les puits de chaleur sont changés typiquement après 2000 à 4000 atterrissages, ce qui selon le rythme d'utilisation de l'aéronef, représente un an d'exploitation de l'aéronef. Dans ce laps de temps, la pile de disque a perdu 5 à 6 centimètres d'épaisseur.

Les opérateurs chargés de la maintenance vérifient régulièrement la position du témoin d'usure (typiquement à une fréquence hebdomadaire) pour vérifier l'état d'usure des disques, et procéder à leur remplacement par des disques neufs si le témoin d'usure atteint une position d'usure maximale. C'est un procédé élémentaire, fiable, mais ne permettant pas d'estimer précisément l'usure actuelle des disques du frein inspecté. Ce procédé rend difficile tout suivi automatisé de l'usure des disques de frein d'un aéronef donné.

Pour améliorer le suivi des freins en service, il a été proposé dans le document US2009/0205910 de remplacer ce témoin d'usure par un capteur d'usure capable de générer à tout moment un signal représentatif de l'état d'usure des disques. Cependant, un tel capteur demande un développement spécifique onéreux. Il doit être très fiable, ne pas casser, ne pas dériver. Les conditions environnementales de son fonctionnement sont sévères : vibrations, poussières de carbone, aspersions par des liquides, températures élevées. De plus, tous les aéronefs comportent plusieurs roues freinées, donc plusieurs freins, par exemple quatre (A320, B737), huit (A330, B787), douze (B777), seize (B747 ou A380) roues freinées, et il importe de distinguer tous les signaux d'usure remontant des multiples freins, pour les associer au bon puit de chaleur. Enfin, un tel capteur implique une modification des freins en service, une modification du câblage électrique parvenant jusqu'au niveau des freins, ce qui génère des coûts de requalification importants, et implique des campagnes de modification des aéronefs en service.

Le document EP 3 051 250 A1 décrit un procédé pour déterminer une longueur d'un témoin d'usure d'un frein d'aéronef.

### OBJET DE L'INVENTION

L'invention vise à proposer un procédé de mesure d'usure des disques de freins d'aéronef, permettant un suivi fiable de l'usure, mais ne nécessitant pas de modification des freins actuels.

### BREVE DESCRIPTION DE L'INVENTION

En vue de la réalisation de ce but, on propose un procédé de mesure d'usure des disques d'un frein d'aéronef muni d'un témoin d'usure monté mobile sur une partie fixe du frein et se déplaçant au fur et à mesure de l'usure des disques. Le procédé de l'invention comprend la prise d'au moins une photographie du témoin d'usure, alors que l'aéronef est immobile au sol et l'analyse de la photographie pour estimer une position du témoin d'usure.

L'analyse de chacune des photographies peut être faite directement par l'appareil de prise de vues qui a servi à prendre la photographie. Alternativement, la photographie peut être envoyée pour stockage et analyse à un récepteur distant, par exemple un serveur de maintenance de la compagnie aérienne ou du fabricant de freins. En pratique, la photographie peut être prise par l'opérateur au moyen d'un simple smartphone.

En associant l'estimation de l'usure à un nombre de vols effectué par l'aéronef au moment de la prise de vue, il est alors possible de suivre l'usure des disques pendant leur durée de vie et vérifier ainsi le bon fonctionnement des freins, ou générer des statistiques sur l'utilisation des freins. Le nombre de vols effectué peut être renseigné par l'opérateur, ou déduit de données de vol fournies par la compagnie.

De préférence, le procédé comprend l'entrée dans l'appareil de prise de vues de l'identifiant de l'aéronef (par exemple son immatriculation) et de la position du frein à prendre en photo. Sur la base de ces données, le procédé comprend alors l'étape de générer un masque qui est affiché sur un écran de visualisation de l'appareil de prise de vues, de sorte que l'opérateur puisse faire coïncider le masque et l'image vue à travers l'objectif de l'appareil. Cette aide à la prise de vue facilite considérablement l'analyse de la photographie, puisque celle-ci est prise selon un angle de prise de vue et une distance sensiblement identiques à chaque fois.

### BREVE DESCRIPTION DES DESSINS

L'invention sera mieux comprise à la lumière de la description qui suit en référence aux figures des dessins annexés, parmi lesquelles :
- La figure 1 est une vue en perspective d'un frein d'aéronef connu en soi, équipé d'un témoin d'usure ;
- La figure 2 est une vue d'un appareil de prise de vue utilisé par un opérateur pour la mise en œuvre du procédé de l'invention, en cours de prise de vue ;
- La figure 3 est une vue partielle du frein de la figure 1 au niveau du témoin d'usure.

### DESCRIPTION DETAILLEE DE L'INVENTION

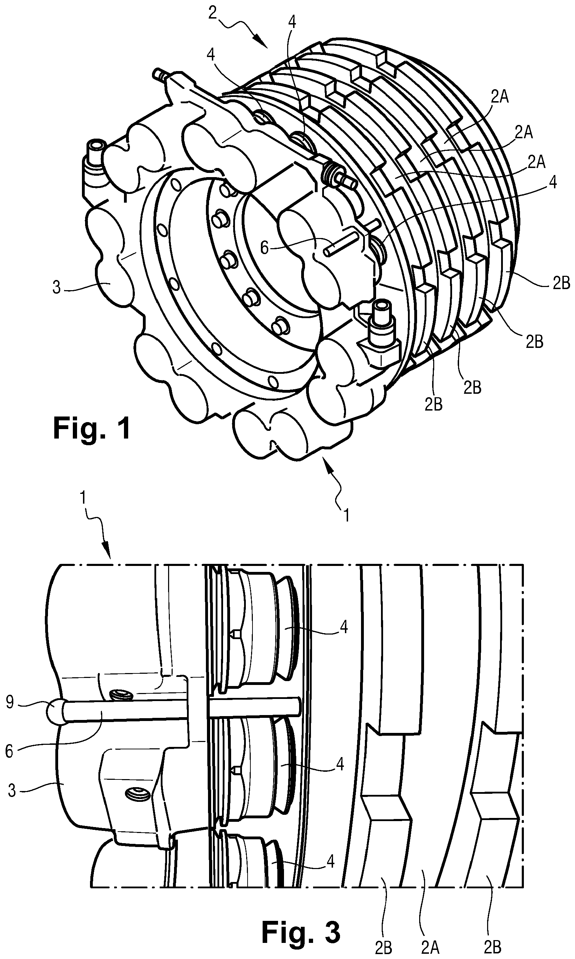

Comme illustré sur la figure 1, un frein 1 typique d'aéronef comporte un tube de torsion sur lequel une pile de disques (ou puit de chaleur) 2 comportant des disques stators 2A et des disques rotors 2B est enfilée pour s'étendre entre une couronne hydraulique 3 portant des pistons 4 et une plaque arrière fixée à l'autre extrémité du tube. Le frein ainsi constitué est enfilé sur l'essieu d'un atterrisseur d'aéronef qui reçoit une roue dont la jante comporte des barrettes d'entraînement en rotation des disques rotors 2B. Le frein 1 est équipé d'un témoin d'usure 6 (il y en a souvent deux sur un frein), ici une simple tige de métal montée coulissante sur la couronne hydraulique 3, et astreinte à rester au contact de la pile de disques, de sorte que le témoin d'usure recule au fur et à mesure de l'usure des disques. Le témoin peut par exemple être attelé à une plaque de poussée disposée sur l'avant du puit de chaleur 2, ou être repoussée vers le premier stator par un ressort. Tout ceci est bien connu et n'est rappelé qu'à titre d'illustration.

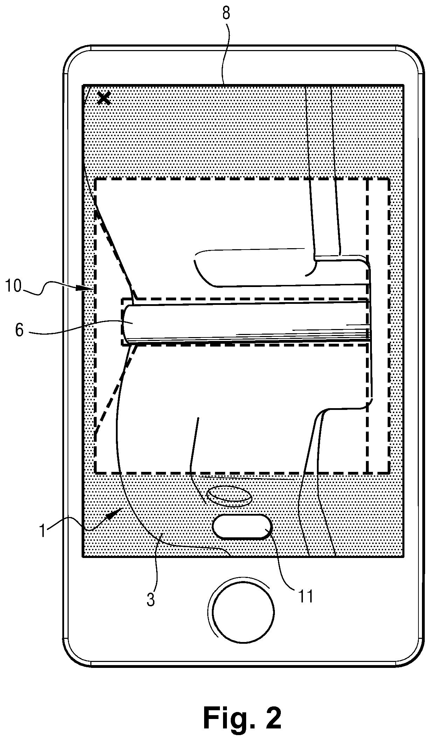

Selon l'invention, l'opérateur de maintenance qui désire connaître l'état d'usure de la pile de disques s'approche du frein concerné avec un appareil de prise de vue 8, ici un simple smartphone. La procédure de l'invention comporte les étapes suivantes :
- L'opérateur démarre une application embarquée dédiée à la mesure d'usure et implantée sur l'appareil de prise de vues;
- L'opérateur entre l'identifiant de l'aéronef (par exemple son immatriculation), et la position du frein sur l'aéronef dont il désire mesurer l'usure ;
- Comme illustré à la figure 2, l'application présente sur l'écran de l'appareil de prise de vues 8 un masque 10 spécifique au frein ainsi identifié, ici une série de contours en traits pointillés ;
- L'opérateur bouge l'appareil de prise de vue 8 pour le placer de sorte que le contour de la couronne hydraulique 3 et du témoin d'usure 6 tels que vus par l'objectif de l'appareil de prise de vue et affiché sur l'écran de visualisation de l'appareil coïncide avec les contours stylisés du masque 10 ;
- Une fois l'appareil de prise de vue placé correctement, l'opérateur prend la photographie, par exemple en appuyant sur le bouton virtuel 11 de l'écran. Le placement correct peut le cas échéant être confirmé par l'émission d'un signal sonore ou encore une mise en surbrillance des contours du masque 10. En variante, la photographie peut être déclenchée automatiquement dès qu'il est identifié que l'appareil de prise de vue est correctement placé ; - Après validation de la photographie, celle-ci est analysée pour estimer la position du témoin d'usure et donc l'usure des disques du puits de chaleur.

L'analyse de la photographie est très fortement facilitée par le fait que l'angle de prise de vue et la distance de l'appareil de prise de vue au frein est identique d'une photographie à l'autre. Seule la position du témoin d'usure est à repérer, dans un environnement visuel sensiblement constant. Des algorithmes simples de reconnaissance visuelle peuvent alors être employés pour déterminer avec fiabilité la position du témoin d'usure. Il est alors immédiat d'associer à cette position une usure de la pile de disques 2. L'analyse de la photographie peut être réalisée directement par l'application embarquée sur l'appareil de prise de vue. Alternativement, la photographie peut être envoyée automatiquement pour analyse à un serveur de maintenance, appartenant par exemple à la compagnie aérienne ou au fabricant de freins. L'analyse de la photographie est alors effectuée à distance.

Il est dès lors possible de constituer une base de données associant, pour chaque frein ou puit de chaleur, l'identifiant de l'aéronef sur lequel il est monté, sa position sur l'aéronef, les multiples photographies prises et les estimations associées d'usure, les dates, heure et géolocalisation des photographies, le nombre de vols effectué par l'aéronef au moment de la photographie.

Cette base de données permet de suivre l'usure de chacun des puits de chaleur, de suivre l'usure globale des puits de chaleur d'un aéronef donné, ou d'établir des statistiques d'usure par aéronef, par ligne desservie, par flotte d'une compagnie... et permet de programmer à l'avance une action de remplacement des freins compte tenu de l'évolution prévisible de l'usure des puits de chaleur.

En pratique, la base de données contient également le numéro de série de chacun des puits de chaleur de chacun des freins de sorte que l'on puisse associer les données d'usure au puit de chaleur correspondant.

Le procédé de l'invention permet donc un traitement beaucoup plus riche des données d'usure des puits de chaleur, au prix du développement d'une application relativement simple, sans modification des freins existants ni développement d'un capteur d'usure embarqué.

Selon un aspect particulier de l'invention, et pour faciliter l'analyse de la photographie, on équipe l'extrémité libre du témoin d'usure d'un repère visuel facilement repérable et localisable, par exemple une sphère 9 visible sur la figure 3. Pour améliorer son repérage, la sphère 9 est de préférence peinte en couleur à haut contraste, comme de l'orange fluorescent. Pour encore faciliter le repérage du témoin d'usure sur la photographie, l'opérateur pourra nettoyer localement la couronne qui est généralement peinte en blanc pour augmenter le contraste entre la couronne et le témoin d'usure.

L'invention n'est pas limitée à ce qui vient d'être décrit, mais bien au contraire englobe toute variante entrant dans le cadre défini par les revendications.

En particulier, bien que le procédé décrit comporte l'étape d'afficher sur l'écran de visualisation un masque pour faciliter le positionnement de l'appareil de prise de vue, on pourra se passer de cette étape si l'algorithme d'analyse d'image est suffisamment perfectionné pour identifier le témoin d'usure et sa position quels que soient l'angle de prise de vue et la distance de l'appareil de prise de vue au frein concerné.

De même, bien que le procédé décrit comporte l'entrée d'un identifiant d'aéronef, cette donnée pourra être obtenue par d'autres moyens tels que la géolocalisation, ou la réception d'un signal d'identification émis par l'aéronef lui-même.

De même encore, bien que le procédé décrit comporte l'entrée de la position du frein sur l'aéronef, cette donnée pourra être obtenue par d'autres moyens. En particulier, il est possible de demander à l'opérateur de respecter une séquence de photographies des freins, de sorte à repérer systématiquement quel est le frein photographié. Par exemple, sur un aéronef à quatre freins du type A320 ou B737, il sera demandé à l'opérateur de photographier les freins dans l'ordre de leur numérotation (freins de 1 à 4, en partant du frein extérieur gauche jusqu'au frein extérieur droit), en prenant soin de lui faire indiquer s'il change de frein avant chaque nouvelle photographie.

## Revendications

1. Procédé de mesure d'usure des disques (2) d'un frein (1) d'aéronef muni d'un témoin d'usure (6) monté mobile sur une partie fixe du frein (1) et se déplaçant au fur et à mesure de l'usure des disques, **caractérisé en ce qu'**il comprend l'utilisation d'un appareil de prise de vues (8) pour prendre, selon un angle de prise de vue prédéterminé et à une distance prédéterminée du frein, au moins une photographie du témoin d'usure alors que l'aéronef est immobile au sol, et l'analyse de la photographie pour uniquement estimer une position du témoin d'usure sur la photographie et en déduire une usure des disques.

2. Procédé selon la revendication 1, comprenant l'entrée d'un identifiant de l'aéronef, l'entrée de la position du frein concerné, et la présentation sur un écran de visualisation de l'appareil de prise de vues d'un masque (10) spécifique pour aider au placement correct de l'appareil de prise de vues en regard du frein concerné en alignant un contour d'une partie du frein et/ou du témoin d'usure tel que visible sur l'écran de visualisation avec le masque, avant de prendre la photographie.

3. Procédé selon la revendication 1, dans lequel l'analyse de la photographie est effectuée par un algorithme d'analyse implanté dans l'appareil de prise de vue.

4. Procédé selon la revendication 1, dans lequel l'estimation de la position du témoin d'usure est stockée dans une base de données en étant associée à un identifiant de l'aéronef et la position du frein sur l'aéronef.

5. Procédé selon la revendication 2, dans lequel l'estimation de la position du témoin d'usure est associée à au moins l'une des données suivantes :
- la date et l'heure de la photographie ;
- la géolocalisation de la photographie ;
- le nombre de vols effectués par l'aéronef à l'instant de la photographie.

6. Procédé selon la revendication 1, dans lequel l'estimation de la position du témoin d'usure est envoyée à un serveur distant pour stockage et analyse statistique.

7. Procédé selon la revendication 1, dans lequel on équipe le témoin d'usure d'un repère visuel (9) identifiable sur la photographie.

## Patentansprüche

1. Verfahren zur Messung des Verschleißes von Scheiben (2) einer Luftfahrzeugbremse (1), die mit einer Verschleißanzeige (6) versehen ist, die beweglich an einem ortsfesten Teil der Bremse (1) gelagert ist und sich mit zunehmendem Verschleiß der Scheiben verschiebt, **dadurch gekennzeichnet, dass** es die Nutzung eines Aufnahmegeräts (8) umfasst, um in einem vorbestimmten Aufnahmewinkel und in einem vorbestimmten Abstand zur Bremse mindestens eine Fotografie der Verschleißanzeige aufzunehmen, während das Luftfahrzeug unbeweglich am Boden steht, sowie die Analyse der Fotografie, um nur eine Position der Verschleißanzeige in der Fotografie zu schätzen und daraus einen Verschleiß der Scheiben abzuleiten.

2. Verfahren nach Anspruch 1, umfassend die Eingabe einer Kennung des Luftfahrzeugs, die Eingabe der Position der betreffenden Bremse und die Darstellung einer spezifischen Maske (10) auf einem Anzeigebildschirm des Aufnahmegeräts zur Unterstützung beim korrekten Platzieren des Aufnahmegeräts in Bezug auf die betreffende Bremse, indem eine Kontur eines Teils der Bremse und/oder der Verschleißanzeige, wie auf dem Anzeigebildschirm sichtbar, mit der Maske ausgerichtet wird, ehe die Fotografie aufgenommen wird.

3. Verfahren nach Anspruch 1, bei dem die Analyse der Fotografie durch einen Analysealgorithmus erfolgt, der in das Aufnahmegerät installiert ist.

4. Verfahren nach Anspruch 1, bei dem die Schätzung der Position der Verschleißanzeige in einer Datenbank gespeichert wird, indem sie mit einer Kennung des Luftfahrzeugs und der Position der Bremse an dem Luftfahrzeug verknüpft wird.

5. Verfahren nach Anspruch 2, bei dem die Schätzung der Position der Verschleißanzeige mit mindestens einem Datenelement der folgenden Daten verknüpft ist:
- das Datum und die Uhrzeit der Fotografie;
- die Ortsbestimmung der Fotografie;
- die Anzahl der Flüge, die von dem Flugzeug zum Zeitpunkt der Fotografie durchgeführt wurden.

6. Verfahren nach Anspruch 1, bei dem die Schätzung der Position der Verschleißanzeige an einen entfernten Server zur Speicherung und statistischen Analyse gesendet wird.

7. Verfahren nach Anspruch 1, bei dem man die Verschleißanzeige mit einer visuellen Marke (9) ausstattet, die auf der Fotografie identifizierbar ist.

## Claims

1. A method of measuring disk (2) wear in an aircraft brake (1) having a wear indicator (6) that is movably mounted on a stationary portion of the brake (1) and that moves progressively with increasing disk wear, the method being **characterized in that** it comprises using a picture-taking appliance (8) to take at least one photograph of the wear indicator while the aircraft is stationary on the ground, and analyzing the photograph in order to only estimate the position of the wear indicator and deduce therefrom the wear of the disks.

2. The method according to claim 1, including inputting an identifier of the aircraft, inputting the position of the brake in question, and presenting a mask (10) on a display screen of the picture-taking appliance, which mask is specific for providing assistance in positioning the picture-taking appliance correctly relative to the brake in question by bringing the mask into alignment with an outline of a portion of the brake and/or of the wear indicator as visible on the display screen, prior to taking the photograph.

3. The method according to claim 1, wherein the photograph is analyzed by an analysis algorithm installed in the picture-taking appliance.

4. The method according to claim 1, wherein the estimated position of the wear indicator is stored in a database in association with an identifier of the aircraft and with the position of the brake on the aircraft.

5. The method according to claim 2, wherein the estimated position of the wear indicator is associated with at least one of the following data items:
- the date and time of the photograph;
- the geolocation of the photograph; and
- the number of flights taken by the aircraft at the time the photograph is taken.

6. The method according to claim 1, wherein the estimated position of the wear indicator is sent to a remote server for storage and statistical analysis.

7. The method according to claim 1, wherein the wear indicator is provided with a visual marker (9) that is identifiable in the photograph.
